(19) Europäisches Patentamt / European Patent Office / Office européen des brevets

(11) **EP 4 172 935 B1**

(12) **EUROPEAN PATENT SPECIFICATION**

(45) Date of publication and mention of the grant of the patent:
**01.04.2026 Bulletin 2026/14**

(21) Application number: **21846325.5**

(22) Date of filing: **23.07.2021**

(51) International Patent Classification (IPC):
**G06T 7/174** (2017.01)   **H04N 13/243** (2018.01)

(52) Cooperative Patent Classification (CPC):
**G06T 7/174; H04N 23/631; H04N 23/632; H04N 23/90;** G06T 2207/10012; G06T 2207/20104; G06T 2207/20212; H04N 23/45

(86) International application number:
**PCT/KR2021/009564**

(87) International publication number:
**WO 2022/019710 (27.01.2022 Gazette 2022/04)**

(54) **METHOD AND ELECTRONIC DEVICE FOR DETERMINING BOUNDARY OF REGION OF INTEREST**

VERFAHREN UND ELEKTRONISCHE VORRICHTUNG ZUR BESTIMMUNG DER GRENZE EINER REGION VON INTERESSE

PROCÉDÉ ET DISPOSITIF ÉLECTRONIQUE POUR DÉTERMINER UNE LIMITE DE RÉGION D'INTÉRÊT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2020 IN 202041031610**

(43) Date of publication of application:
**03.05.2023 Bulletin 2023/18**

(73) Proprietor: **Samsung Electronics Co., Ltd.**
**Gyeonggi-do 16677 (KR)**

(72) Inventors:
• **SHERAJ, Mohammad**
  **Gyeonggi-do, 16677 (KR)**
• **CHOPRA, Ashish**
  **Gyeonggi-do, 16677 (KR)**

(74) Representative: **Gulde & Partner**
**Patent- und Rechtsanwaltskanzlei mbB**
**Berliner Freiheit 2**
**10785 Berlin (DE)**

(56) References cited:
KR-A- 20160 131 261    KR-A- 20200 020 646
US-A1- 2016 328 853    US-A1- 2016 350 930
US-A1- 2020 143 549    US-B1- 8 619 148
US-B2- 9 142 010

• SUNG-YEOL KIM, YO-SUNG HO: "Generation of ROI Enhanced High-resolution Depth Maps in Hybrid Camera System ", JOURNAL OF BROADCAST ENGINEERING,, vol. 13, no. 05, 30 September 2008 (2008-09-30), Korea, pages 596 - 601, XP055892507, ISSN: 1226-7953, DOI: 10.5909/JBE.2008.13.5.596
• SOOCHAHN LEE, KWON DONGJIN, YUN IL DONG, LEE SANG-UK: "Joint Segmentation of Multi-View Images by Region Correspondence", JOURNAL OF BROADCAST ENGINEERING, KOREA, vol. 13, no. 5, 30 September 2008 (2008-09-30), Korea, pages 685 - 695, XP055892535, ISSN: 1226-7953, DOI: 10.5909/JBE.2008.13.5.685

## Description

[Technical Field]

The present disclosure relates to image processing methods, and more specifically related to a method and electronic device for determining a boundary of a region of interest (ROI).

[Background Art]

Recent development of electronic devices and image photography technologies in photography make easier to capture various images using different image photography technologies and the electronic devices with an image photography feature. There is an increasing need for a user not only to photograph a subject but also to photograph an image with different effects (e.g. a bokeh effect, a dolly effect, a relighting effect, a watermark effect, an absentee insertion effect, a refocus effect, and a background style effect). Bokeh is a blur effect produced in an out-of-focus part of an image by a lens of the electronic device to enhance an aesthetic quality and emphasize a primary subject. While capturing the image with the bokeh effect, existing systems focus on providing a set of pattern (e.g. a butterfly shape, a star shape, a heart shape) on a background region (i.e. region other than the primary subject) of the image. Further, the existing systems do not provide a clearer boundary distinction between the primary subject and the background region. Boundary distinguishing is key to apply the different effects to the image. KR 2016 0131261 A discloses a method for monitoring a region of interest while a control device controls a first surveillance camera and a second surveillance camera integrally installed. US 9,142,010 B2 discloses an image enhancement based on combining images from multiple cameras. US 8,619,148 B1 relates to image enhancement based on combining images from multiple cameras.

[Disclosure]

[Technical Solution]

Provided is an image processing apparatus as defined in the appended claims.
Provided is an operating method as defined in the appended claims.
Provided is a computer readable storage medium as defined in the appended claims.

[Description of Drawings]

This method is illustrated in the accompanying drawings, throughout which like reference letters indicate corresponding parts in the various figures. The embodiments herein will be better understood from the following description with reference to the drawings, in which:

FIG. 1 illustrates a block diagram of an electronic device for producing a media file, according to an embodiment as disclosed herein;
FIG. 2 illustrates a block diagram of a media effect controller for producing the media file, according to an embodiment as disclosed herein;
FIG. 3A is a flow diagram illustrating various operations for producing the media file, according to an embodiment as disclosed herein;
FIG. 3B is a flow diagram illustrating various operations for producing the media file based on a boundary of at least one actual region of interest (ROI) of a primary image frame, according to an embodiment as disclosed herein;
FIG. 3C is a flow diagram illustrating various operations for determining the boundary of the at least one actual ROI based on at least one rough region of interest (RROI) in the primary image frame and at least one secondary image frame, according to an embodiment as disclosed herein;
FIG. 3D is a flow diagram illustrating various operations for transforming the at least one secondary image frame based on the determined boundary of the at least one RROI, according to an embodiment as disclosed herein;
FIGS. 4A to 4C illustrate an example scenario of simultaneously capturing the primary image frame using a primary image sensor of the electronic device and the at least one secondary image frame using at least one secondary image sensor of the electronic device, according to an embodiment as disclosed herein;
FIG. 5 illustrates an example scenario of detecting at least one RROI in the primary image frame, according to an embodiment as disclosed herein;
FIG. 6 illustrates an example scenario of determining the boundary of at least one actual ROI based on the at least one RROI in the primary image frame and the at least one secondary image frame, according to an embodiment as disclosed herein;

FIGS. 7A to 7F illustrate an example scenario of transforming the at least one secondary image frame, according to an embodiment as disclosed herein;

FIG. 8 illustrates an example scenario of wrapping the at least one transformed secondary image frame over the primary image frame, according to an embodiment as disclosed herein;

FIGS. 9A and 9B illustrate an example scenario of applying bokeh effect in regions outside the boundary of the at least one actual ROI of the primary image frame based on the determined radius of feature point difference, according to an embodiment as disclosed herein;

FIG. 10 illustrates an example scenario of generating the media file comprising one or more parallaxes in multitude of directions, according to an embodiment as disclosed herein;

FIG. 11 is a schematic block diagram of a structure of an image processing apparatus, according to an embodiment; and

FIG. 12 is a schematic flowchart of an operating method 1200 of the image processing apparatus, according to an embodiment.

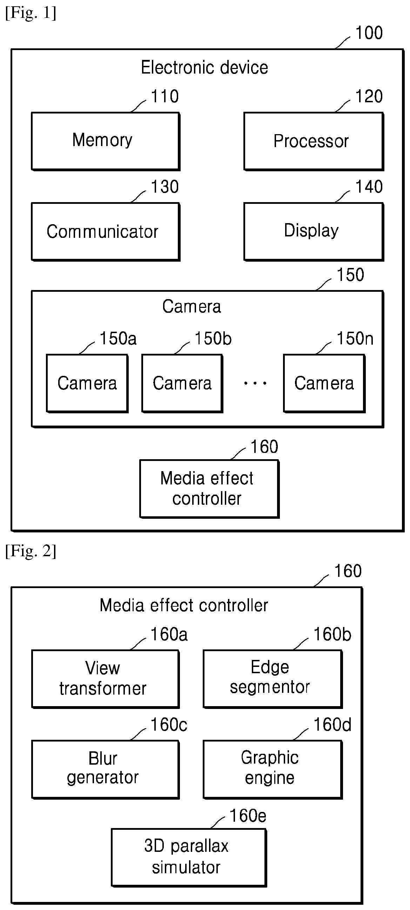

Among the above figures, the embodiments of Figs. 1, 11 and 12 pertain to the claimed solution.

[Best Mode]

In the preset disclosure, parallax refers to a displacement or difference in an object's apparent position viewed along two different lines of sight, and is measured by the angle or semi-angle of inclination between those two lines.

In the present disclosure, superimposing refers to the positioning of the image at the top of the already existing image at a given position in order to compare the respective pixel values of one image with the other image and make changes based on the result.

In the present disclosure, gradient descent refers to an optimization algorithm which reduces the function to move in the direction of the steepest descent as defined by the negative gradient of the function.

In the present disclosure, feature points in the image frame refers to a point in the image frame that has a well-defined position and can be robustly detected are references to interest points. Further, feature points are stable as illumination / brightness variations under local and global disturbances in the image domain. SIFT (Scale-invariant feature transform) algorithms are used to find such points.

In the present disclosure, the boundary of the RROI is segmented by the primary image sensor and the at least one secondary image sensor.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein.

[Mode for Invention]

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

It is to be understood that the singular forms "a," "an," and "the" include plural referents unless the context clearly dictates otherwise. Thus, for example, reference to "a component surface" includes reference to one or more of such surfaces.

While describing the embodiments, technical content that is well known in the related fields and not directly related to the disclosure will not be provided. By omitting redundant descriptions, the essence of the disclosure will not be obscured and may be clearly explained.

For the same reasons, components may be exaggerated, omitted, or schematically illustrated in drawings for clarity. Also, the size of each component does not completely reflect the actual size. In the drawings, like reference numerals denote like elements.

As used herein, the term "and/or" includes any and all combinations of one or more of the associated listed items. Expressions such as "at least one of," when preceding a list of elements, modify the entire list of elements and do not modify the individual elements of the list. Throughout the disclosure, the expression "at least one of a, b or c" indicates only a, only b, only c, both a and b, both a and c, both b and c, all of a, b, and c, or variations thereof.

Advantages and features of one or more embodiments of the disclosure and methods of accomplishing the same may be understood more readily by reference to the following detailed description of the embodiments and the accompanying drawings. In this regard, the present embodiments may have different forms and should not be construed as being limited to the descriptions set forth herein. Rather, these embodiments are provided so that this disclosure will be thorough and complete and will fully convey the concept of the present embodiments to one of ordinary skill in the art, and the disclosure will only be defined by the appended claims.

Here, it will be understood that combinations of blocks in flowcharts or process flow diagrams may be performed by computer program instructions. Since these computer program instructions may be loaded into a processor of a general purpose computer, a special purpose computer, or another programmable data processing apparatus, the instructions, which are performed by a processor of a computer or another programmable data processing apparatus, create units for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated consecutively may actually be executed substantially concurrently, or the blocks may sometimes be performed in a reverse order according to the corresponding function.

Here, the term "unit" in the embodiments of the disclosure means a software component or hardware component such as a field-programmable gate array (FPGA) or an application-specific integrated circuit (ASIC) and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with a smaller number of components and "units", or may be divided into additional components and "units". Furthermore, the components and "units" may be embodied to reproduce one or more central processing units (CPUs) in a device or security multimedia card. Also, in the embodiments, the "unit" may include at least one processor. In the disclosure, a controller may also be referred to as a processor.

The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: a, b, and c" includes any of the following combinations: a, b, c, a and b, a and c, b and c, and a and b and c.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Artificial intelligence-related functions according to the disclosure are operated through a processor and a memory. A processor may include one or a plurality of processors. In this case, the one or the plurality of processors may each be a general purpose processor, such as a CPU, an AP, and a digital signal processor (DSP), a graphics dedicated processor, such as a GPU and a vision processing unit (VPU), or an artificial intelligence dedicated processor, such as an NPU. The one or the plurality of processors control to process input data according to a predefined operation rule or an AI model stored in a memory. Alternatively, when the one or the plurality of processors are artificial intelligence dedicated processors, the artificial intelligence dedicated processors may be designed to have a hardware structure specialized for processing a specific AI model.

The predefined operation rule or the AI model may be constructed through learning. Here, construction through learning means that, as a basic AI model is trained by using a plurality of pieces of learning data according to a learning algorithm, a predefined operation rule or an AI model that is set to perform a desired characteristic (or purpose) is constructed. Such learning may be performed in a device in which an AI according to the disclosure is executed or may be performed through a separate server and/or a system. Examples of learning algorithms include supervised learning, unsupervised learning, semi-supervised learning, or reinforcement learning, but are not limited to the above examples.

An AI model may include a plurality of neural network layers. Each of the plurality of neural network layers has a plurality of weight values, and a neural network operation is performed through operations between an operation result of the previous layer and the plurality of weight values. The weight values of the neural network layers may be optimized through learning results of the AI model. For example, the plurality of weight values may be renewed such that a loss value or a cost value obtained by an AI model is during a learning process is reduced or minimized. Artificial neural networks may include a deep neural network (DNN) and may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), and a deep Q-networks, but are not limited to the above examples.

Definitions for other certain words and phrases are provided throughout this patent document. Those of ordinary skill in the art should understand that in many if not most instances, such definitions apply to prior as well as future uses of such defined words and phrases.

Hereinafter, the disclosure will be described in detail with reference to the accompanying drawings.

Accordingly, some embodiments herein disclose a method for producing a media file. The method includes simultaneously capturing a primary image frame using a primary image sensor of an electronic device and at least one secondary image frame using at least one secondary image sensor of the electronic device. Further, the method includes detecting, by the electronic device, at least one rough region of interest (RROI) in the primary image frame. The RROI may mean a roughly identified region corresponding to the object of interest. Further, the method includes determining, by the electronic device, a boundary of at least one actual ROI based on the at least one RROI in the primary image frame and the at least one secondary image frame. Further, the method includes producing, by the electronic device, the media file based on the boundary of the at least one actual ROI of the primary image frame. Further, the method includes storing, by the electronic device, the media file.

The principal object of the embodiments herein is to provide a method and electronic device for producing a media file.

Another object of the embodiment herein is to simultaneously capture a primary image frame using a primary image sensor of an electronic device and at least one secondary image frame using at least one secondary image sensor of the electronic device.

Another object of the embodiment herein is to detect at least one rough region of interest (RROI) in the primary image frame.

Another object of the embodiment herein is to determine a boundary of at least one actual region of interest (ROI) based on the at least one RROI in the primary image frame and the at least one secondary image frame.

Another object of the embodiment herein is to produce the media file based on the boundary of the at least one actual ROI of the primary image frame and store the media file.

Referring now to the drawings, and more particularly to FIGS. 1 through 6, embodiments of the disclosure are illustrated.

FIG. 1 illustrates a block diagram of an electronic device (100) for producing a media file, according to an embodiment as disclosed herein. The electronic device (100) can be, for example, but not limited to a smartphone, a laptop, an internet of things (IoT) device, a smart watch, a drone, an action camera, a sports camera or a like. In an embodiment, the electronic device (100) includes a memory (110) and a processor (120). The electronic device (100) may also include a communicator (130), a display (140), a camera (150), and a media effect controller (160).

The memory (110) also stores instructions to be executed by the processor (120). The memory (110) may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory (110) may, in some examples, be considered a non-transitory storage medium. The term "non-transitory" may indicate that the storage medium is not embodied in a carrier wave or a propagated signal. However, the term "non-transitory" should not be interpreted that the memory (110) is non-movable. In some examples, the memory (110) can be configured to store larger amounts of information than the memory. In certain examples, a non-transitory storage medium may store data that can, over time, change (e.g., in Random Access Memory (RAM) or cache). The memory (110) can be an internal storage unit or it can be an external storage unit of the electronic device (100), a cloud storage, or any other type of external storage.

The processor (120) may communicate with the memory (110), the communicator (130), the display (140), the camera (150), and the media effect controller (160). The processor (120) is configured to execute instructions stored in the memory (110) and to perform various processes. The communicator (130) is configured for communicating internally between internal hardware components and with external devices via one or more networks. The camera (150) includes a primary image sensor (150a) (e.g. primary camera) and at least one secondary image sensor (150b-150n) (e.g. secondary camera).

In an embodiment, the media effect controller (160) is configured to simultaneously capture a primary image frame using the primary image sensor (150a) of the electronic device (100) and at least one secondary image frame using at least one secondary image sensor (150b-150n) of the electronic device (100). Further, the media effect controller (160) is configured to determine at least one rough region of interest (RROI) in the primary image frame. The RROI may be determined by using segmentation algorithm. The RROI may be determined based on a user selection. Further, the media effect controller (160) is configured to determine a boundary of at least one actual ROI based on the at least one RROI in the primary image frame and the at least one secondary image frame. The actual ROI may be referred to simply as ROI. Further, the media effect controller (160) may be configured to produce the media file based on the boundary of the at least one actual ROI of the primary image frame. Further, the media effect controller (160) may be configured to store the media file in the memory (110).

In an embodiment, the media effect controller (160) is configured to apply at least one effect in regions outside the boundary of the at least one actual ROI (the background) of the primary image frame. The at least one effect may include a bokeh effect, a dolly effect, a relighting effect, a watermark effect, an absentee insertion effect, a refocus effect, or a background style effect. Further, the media effect controller (160) may be configured to produce the media file including the at least one effect applied in the regions outside the boundary of the at least one actual ROI of the primary image frame.

In an embodiment, the media effect controller (160) is configured to generate the media file including one or more parallaxes in multitude of directions based on a primary image sensor position, at least one secondary image sensor position, and the boundary of the at least one actual ROI of the primary image frame.

In an embodiment, the media effect controller (160) is configured to determine a boundary of the at least one RROI based on the primary image frame and the at least one secondary image frame. Further, the media effect controller (160) may be configured to align the RROI of the primary image frame with the RROI in the at least one secondary image frame by transforming the at least one secondary image frame based on the determined boundary of the at least one RROI. The transformation may be a geometric transformation. The transformation may be a projective transformation (homography). The transformation may move all or part of the RROI of the second image to the position of the RROI of the first image. The transformation may move feature points of the RROI of the second image to the position of the corresponding feature points the RROI of the first image. Further, the media effect controller (160) may be configured to determine the boundary of the at least one actual ROI by superimposing the at least one transformed secondary image frame on the primary image frame. The media effect controller (160) may be configured to determine the boundary of the at least one actual ROI by comparing the primary image frame with the at least one transformed secondary image frame. The media effect controller (160) may be configured to determine a static region between the primary image frame and the at least one transformed secondary image frame as the at least one actual ROI.

In an embodiment, the media effect controller (160) is configured to apply a gradient descent on transformation parameters. The gradient descent is applied to minimize a feature point difference between the RROI of the primary image frame and the RROI of at least one secondary image frame. The gradient descent is applied by altering at least one of a translation of the at least one secondary image, a zoom (scaling) of the at least one secondary image, and a perspective change of the at least one secondary image frame. The perspective change may be defined based on the relative position of the primary image sensor and the secondary image sensor. For example, when the primary image sensor and the secondary image sensor are located horizontally, the perspective change may be horizontal orientation. When the primary image sensor and the secondary image sensor are located vertically, the perspective change may be vertical orientation. The perspective change parameters may be defined based on a relative position of the primary image sensor and the secondary image sensor. The at least one of the translation of the at least one secondary image frame, the zoom of the at least one secondary image frame, and the perspective change of the at least one secondary image frame is altered based on the position of the at least one secondary image sensor (150b-150n) and the primary image sensor (150a). The transformation parameters may include at least one of a horizontal translation, a vertical translation, a zoom level, and orientation information. Further, the media effect controller (160) may be configured to transform the at least one secondary image frame based on the determined boundary of the at least one RROI after the gradient descent is applied. The media effect controller (160) may be configured to transform the at least one secondary image frame based on the determined transformation parameters after the gradient descent is applied.

In an embodiment, the media effect controller (160) is configured to determine a radius of the feature point difference between the primary image frame and the at least one secondary image frame. Further, the media effect controller (160) may be configured to apply the bokeh effect in regions outside the boundary of the at least one actual ROI of the primary image frame based on the radius.

Although the FIG. 1 shows various hardware components of the electronic device (100) but it is to be understood that other embodiments are not limited thereon. In other embodiments, the electronic device (100) may include less or more number of components. Further, the labels or names of the components are used only for illustrative purpose and does not limit the scope of the disclosure. One or more components can be combined together to perform same or substantially similar function to produce the media file.

FIG. 2 illustrates a block diagram of the media effect controller (160) for producing the media file, according to an embodiment as disclosed herein. In an embodiment, the media effect controller (160) includes a view transformer (160a), an edge segmentor (160b), a blur generator (160c), a graphic engine (160d), and a three-dimensional (3D) parallax simulator (160e).

In an embodiment, the view transformer (160a) simultaneously captures the primary image frame using the primary image sensor (150a) of the electronic device (100) and at least one secondary image frame using at least one secondary image sensor (150b-150n) of the electronic device (100). Further, the view transformer (160a) may determine at least one RROI in the primary image frame. Further, the view transformer (160a) may transform the at least one secondary image frame based on the determined boundary of the at least one RROI. Further, the view transformer (160a) may apply the gradient descent on transformation parameters. Further, the view transformer (160a) may transform the at least one secondary image frame based on the determined boundary of the at least one RROI after the gradient descent is applied. The view transformer (160a) may transform the at least one secondary image frame based on the transformation parameters after the gradient descent is applied.

In an embodiment, the edge segmentor (160b) determines the boundary of at least one actual ROI based on the at least one RROI in the primary image frame and the at least one secondary image frame. Further, the edge segmentor (160b) may align the RROI of the primary image frame with the RROI in the at least one secondary image frame by transforming the at least one secondary image frame based on the determined boundary of the at least one RROI. Further, the edge segmentor (160b) may determine the boundary of the at least one actual ROI by superimposing the at least one transformed secondary image frame on the primary image frame.

In an embodiment, the blur generator (160c) determines the radius of the feature point difference between the primary image frame and the at least one secondary image frame. Further, the blur generator (160c) applies the bokeh effect in regions outside the boundary of the at least one actual ROI of the primary image frame based on the radius.

In an embodiment, the graphic engine (160d) applies at least one effect in regions outside the boundary of the at least one actual ROI of the primary image frame. Further, the graphic engine (160d) may produce the media file including the at least one effect applied in the regions outside the boundary of the at least one actual ROI of the primary image frame.

In an embodiment, the 3D parallax simulator (160e) generates the media file including one or more parallaxes in multitude of directions based on the primary image sensor position, the at least one secondary image sensor position and the boundary of the at least one actual ROI of the primary image frame.

Although the FIG. 2 shows various hardware components of the media effect controller (160) but it is to be understood that other embodiments are not limited thereon. In other embodiments, the media effect controller (160) may include less or more number of components. Further, the labels or names of the components are used only for illustrative purpose and does not limit the scope of the disclosure. One or more components can be combined together to perform same or substantially similar function to produce the media file.

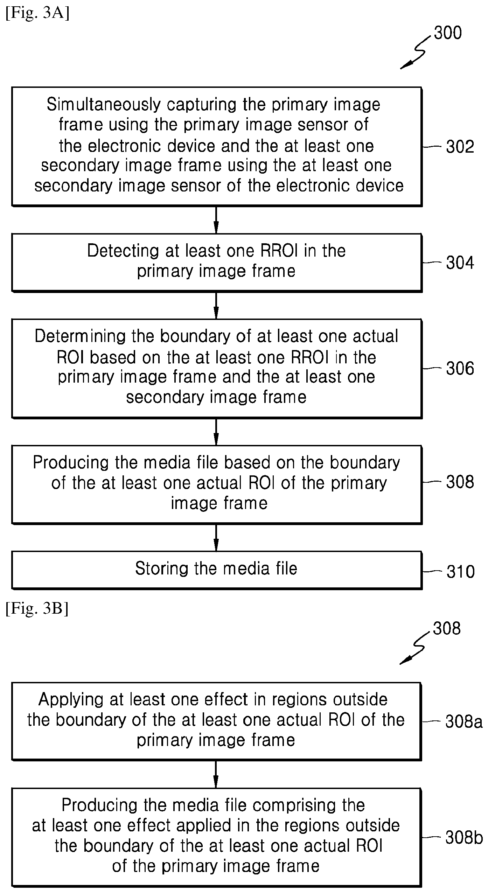

FIG. 3A is a flow diagram (300) illustrating various operations for producing the media file, according to an embodiment as disclosed herein. The operations (302-310) are performed by the electronic device (100).

At 302, the method includes simultaneously capturing the primary image frame using the primary image sensor (150a) of the electronic device (100) and the at least one secondary image frame using at least one secondary image sensor (150b-150n) of the electronic device (100). At 304, the method includes detecting at least one RROI in the primary image frame. At 306, the method includes determining the boundary of at least one actual ROI based on the at least one RROI in the primary image frame and the at least one secondary image frame. At 308, the method includes producing the media file based on the boundary of the at least one actual ROI of the primary image frame. At 310, the method includes storing the media file.

FIG. 3B is a flow diagram (308) illustrating various operations for producing the media file based on the boundary of at least one actual ROI of the primary image frame, according to an embodiment as disclosed herein. The operations (308a-308b) are performed by the electronic device (100).

At 308a, the method includes applying at least one effect in regions outside the boundary of the at least one actual ROI of the primary image frame. At 308b, the method includes producing the media file including the at least one effect applied in the regions outside the boundary of the at least one actual ROI of the primary image frame.

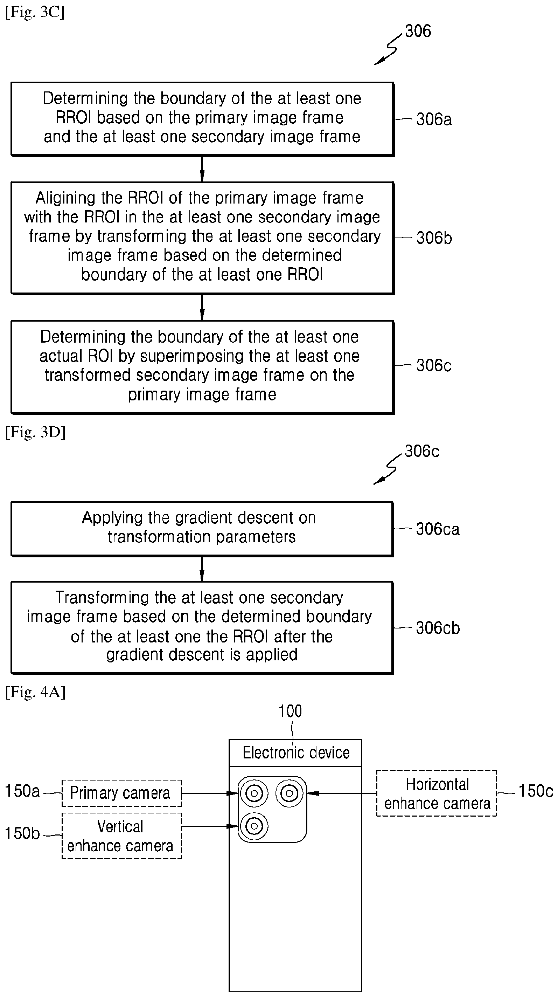

FIG. 3C is a flow diagram (306) illustrating various operations for determining the boundary of the at least one actual ROI based on at least one RROI in the primary image frame and at least one secondary image frame, according to an embodiment as disclosed herein. The operations (306a-306b) are performed by the electronic device (100).

At 306a, the method includes determining the boundary of the at least one RROI based on the primary image frame and the at least one secondary image frame. At 306b, the method includes aligning the RROI of the primary image frame with the RROI in the at least one secondary image frame by transforming the at least one secondary image frame based on the determined boundary of the at least one RROI. At 306c, the method includes determining the boundary of the at least one actual ROI by superimposing the at least one transformed secondary image frame on the primary image frame.

FIG. 3D is a flow diagram (306c) illustrating various operations for transforming the at least one secondary image frame based on the determined boundary of the at least one RROI, according to an embodiment as disclosed herein. The operations (306ca-306cb) are performed by the electronic device (100).

At 306ca, the method includes applying the gradient descent on transformation parameters. At 306cb, the method includes transforming the at least one secondary image frame based on the determined boundary of the at least one RROI after the gradient descent is applied.

FIGS. 4A to 4C illustrates an example scenario of simultaneously capturing the primary image frame using the primary image sensor (150a) of the electronic device (100) and the at least one secondary image frame using the at least one secondary image sensor (150b-150n) of the electronic device (100), according to an embodiment as disclosed herein.

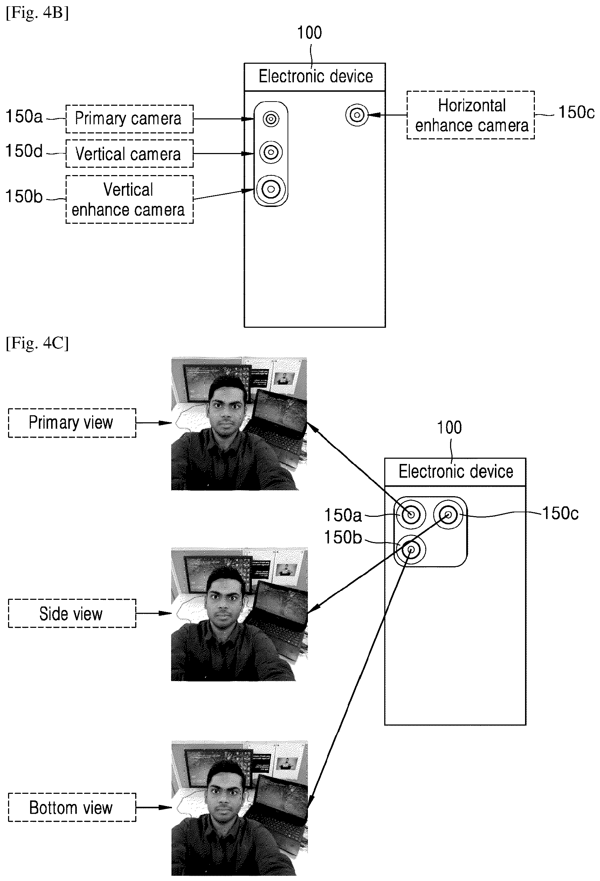

FIGS. 4A and 4B illustrate that various position of the primary image sensor (150a) (i.e. primary camera) and the at least one secondary image sensor (150b-150n) (e.g. vertical camera, vertical enhance camera, horizontal enhance camera) of the electronic device (100). Each of the primary image sensor (150a) and the at least one secondary image sensor (150b-150n) may be a wide-camera or a tele-camera.

FIG. 4C illustrates that the electronic device (100) captures the primary image frame (i.e. primary view) using the primary image sensor (150a), the at least one secondary image frame (e.g. side view, bottom view) using the at least one secondary image sensor (150b-150n). In an example, the side view is captured by the horizontal enhance camera (150c) and the bottom view is captured by the vertical enhance camera (150b).

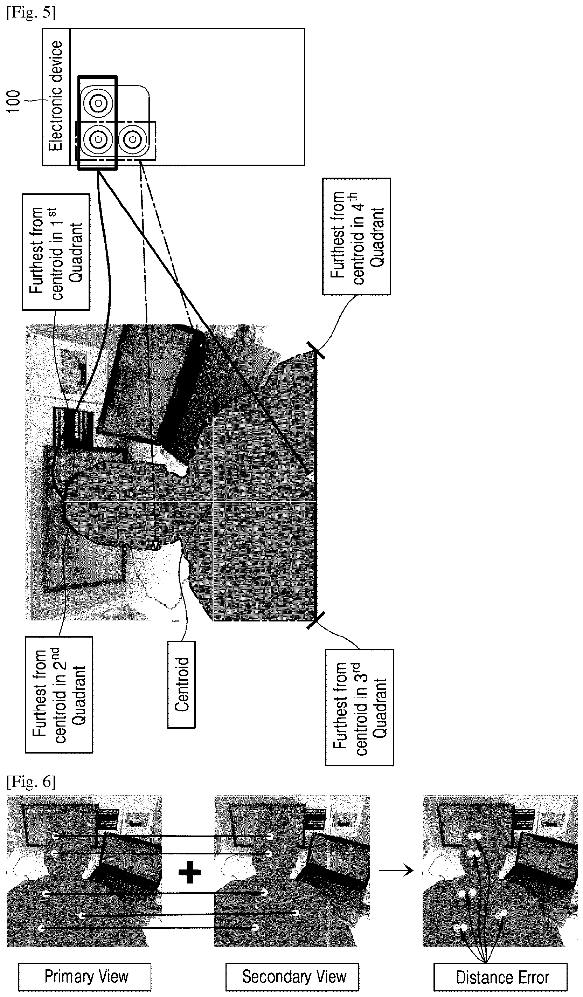

FIG. 5 illustrates an example scenario of determining at least one RROI in the primary image frame, according to an embodiment as disclosed herein. The RROI may be detected by an image segmentation algorithm such as DeepLab. The RROI may be selected by the user of the electronic device (100)) in the primary image frame.

FIG. 6 illustrates an example scenario of determining the boundary of at least one actual ROI based on the at least one RROI in the primary image frame and the at least one secondary image frame, according to an embodiment as disclosed herein. Further, centroid and furthest points in each quadrant may be determined by either Euclidian distance or Manhattan distance, in which Manhattan distance provides preference to points at the center. Furthest points are basically points which have maximize '$|x|+|y|$'.

In an embodiment, horizontal pair of cameras provide vertical boundaries and vertical pair of cameras provide horizontal boundaries. In another embodiment, horizontal pair of cameras provide horizontal boundaries and vertical pair of cameras provide vertical boundaries.

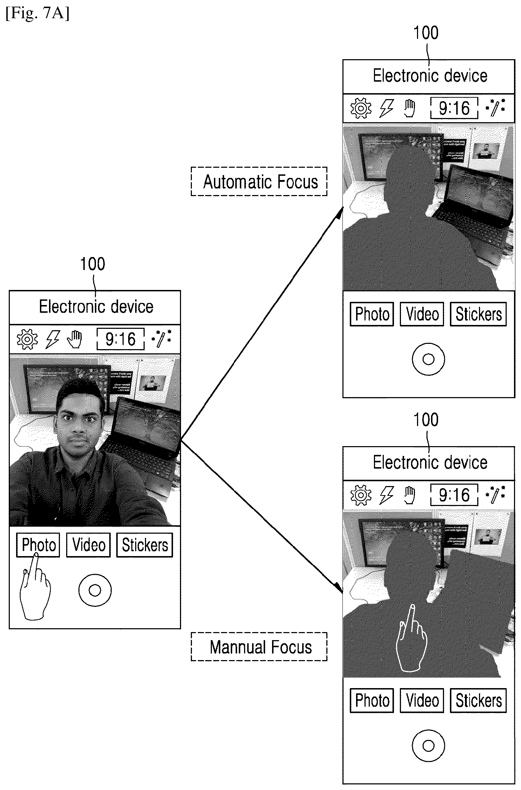

FIGS. 7A to 7F illustrate an example scenario of transforming the at least one secondary image frame, according to an embodiment as disclosed herein.

FIG. 7A illustrates that feature point difference (i.e. distance error) between the RROI of the primary image frame and the RROI of at least one secondary image frame. The feature points of the RROI of the primary image frame and the RROI of at least one secondary image frame matches using a ratio test on scale-invariant feature transform (SIFT). The gradient descent is applied to minimize the feature point difference.

$$\mathbf{x_{n+1}} = \mathbf{x_n} - \gamma_n \nabla F(\mathbf{x_n}), \ n \geq 0 \qquad (1)$$

$$\gamma_n = \frac{\left|(\mathbf{x_n} - \mathbf{x_{n-1}})^T \left[\nabla F(\mathbf{x_n}) - \nabla F(\mathbf{x_{n-1}})\right]\right|}{\left\|\nabla F(\mathbf{x_n}) - \nabla F(\mathbf{x_{n-1}})\right\|^2} \qquad (2)$$

$$F(\mathbf{x_0}) \geq F(\mathbf{x_1}) \geq F(\mathbf{x_2}) \geq \cdots \qquad (3)$$

Where x is the transformation values of the transformations, and F(x) is the error function such as the sum of distance squared between feature points.

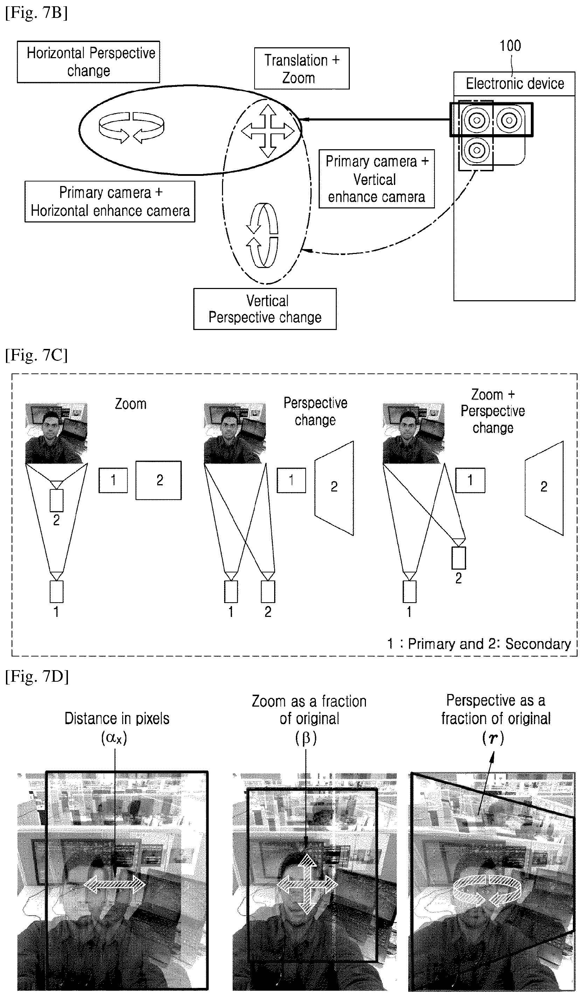

FIGS. 7B and 7C illustrate the transformation parameters. The transformation parameters may include at least one of the horizontal translation, the vertical translation, the zoom level, and the orientation information. The gradient descent is applied by altering at least one of the translation of the at least one secondary image frame, the zoom of the at least one secondary image frame, and the perspective change of the at least one secondary image frame. FIG. 7C illustrates the effect to be corrected in the secondary image frame. The left-most illustration represents no displacement where "1" is a tele-camera and "2" is a wide-camera with the same zoom level. The center-most illustration represents displacement where "1" and "2" are tele-cameras. The right-most illustration represents displacement where "1" is a tele-camera and "2" is a wide-camera with the same zoom level. The perspective change of the at least one secondary image frame with respect to the primary image sensor (150a) is shown in Table1.

Table 1

| Configuration with Respect to primary | Zoom | Translation | Perspective Change |
|---|---|---|---|
| Vertical | Yes | Yes | Vertical |
| Horizontal | Yes | Yes | Horizontal |

FIG. 7D illustrates that gradient descent is applied by altering at least one of the translation of the at least one secondary image frame, the zoom of the at least one secondary image frame, and the perspective change of the at least one secondary image frame. Transforming the at least one secondary image frame is performed by,

The transformed x coordinate:

$$f_x(x,y,\alpha_x,\alpha_y,\beta,\gamma) = translation_x(x,y,\alpha_x) + translation_y(x,y,\alpha_y) + zoom_x(x,y,\beta) + Perspective_x(x,y,\gamma)$$

$$(4)$$

The transformed y coordinate:

$$f_y(x,y,\alpha_x,\alpha_y,\beta,\gamma) = translation_x(x,y,\alpha_x) + translation_y(x,y,\alpha_y) + zoom_y(x,y,\beta) + Perspective_y(x,y,\gamma)$$

$$(5)$$

Where α, β, Y are the parameters of the transformation operations.
<u>Distance Squared Error (DSE):</u>

$$DSE = \Sigma_i\{(x'_i - f_x(x_i,y_i,\alpha_x,\alpha_y,\beta,\gamma))^2 + (y'_i - f_y(x_i,y_i,\alpha_x,\alpha_y,\beta,\gamma))^2\} \quad (6)$$

Where $x'_i$ and $y'_i$ are the corresponding feature points in the primary view of $x_i$ and $y_i$.

In an embodiment, $\alpha_x$, $\alpha_y$, β, γ are values that define a Transformation matrix which is used to create the output image (i.e. transformed secondary image frame). Specifically, α is the translation parameter, β is the Zoom parameter and Y is the perspective change parameter. For each of $\alpha_x$, $\alpha_y$, β, γ makes a very small positive change δ one at a time. Learning Rate is a fixed constant whose value depends upon transformation. Calculating new Transformation parameters is performed by,

New $\alpha_x$:

$$\alpha_x - (\text{Learning Rate } \alpha_x)*(\{DSE \text{ with } \alpha_x = \alpha_x +\delta\} - \{DSE \text{ with } \alpha_x = \alpha_x\}) \quad (7)$$

New $\alpha_y$:

$$\alpha_y - (\text{Learning Rate } \alpha_y)*(\{DSE \text{ with } \alpha_y = \alpha_y +\delta\} - \{DSE \text{ with } \alpha_y = \alpha_y\}) \quad (8)$$

New β:

$$\beta - (\text{Learning Rate } \beta)*(\{DSE \text{ with } \beta = \beta +\delta\} - \{DSE \text{ with } \beta = \beta\}) \quad (9)$$

New γ:

$$\gamma - (\text{Learning Rate } \gamma)*(\{DSE \text{ with } \gamma = \gamma +\delta\} - \{DSE \text{ with } \gamma = \gamma\}) \quad (10)$$

In each iteration, the process may be performed for all feature points or for a single randomly chosen point using stochastic gradient descent. The Process of updating $\alpha_x$, $\alpha_y$, β, γ continues till the Distance Squared Error (DSE) reaches a threshold value or a specified number of operations are performed.

In an embodiment, the translation, the zoom, and the perspective change of the at least one secondary image frame are repeatedly applied in increments to reduce distance error of feature points.

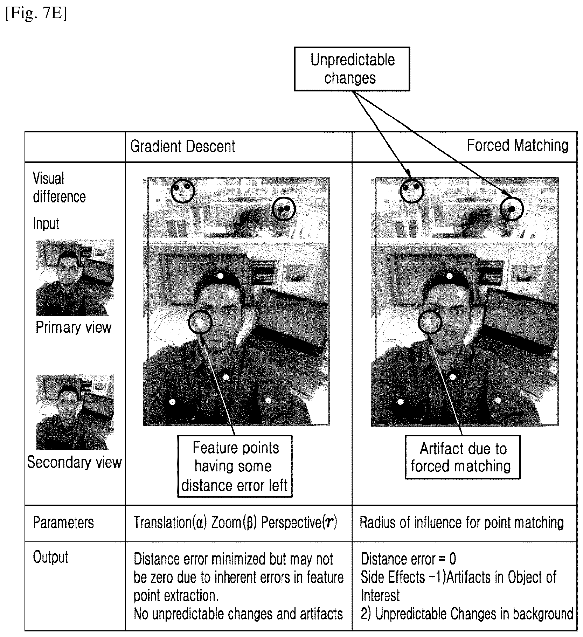

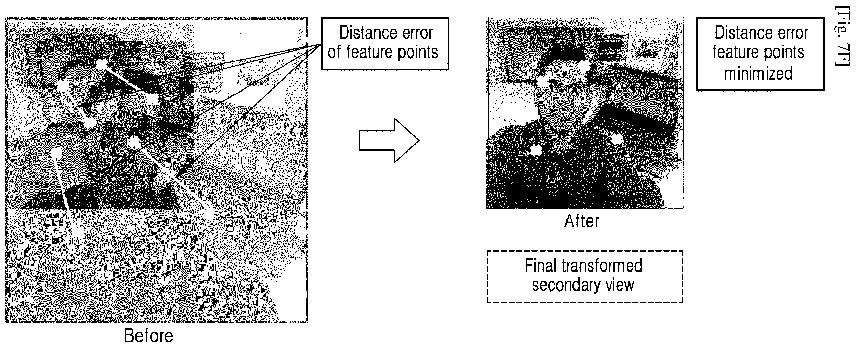

In an embodiment, for side transform and bottom transform, the view transformer (160a) stretch the image along with the feature points for a perfect overlap of the feature points. But this would not mimic how the real image was created by shifting the position of the camera which implies a set of transformations. Also, that would bring artifacts (refer to FIG. 7E), if the feature points do not align perfectly. These transformations are reversed by n-variable gradient descent to get the overlapping view for avoiding "Artifacts". FIG. 7F illustrates that the transformed secondary image frame by minimizing distance error of feature points.

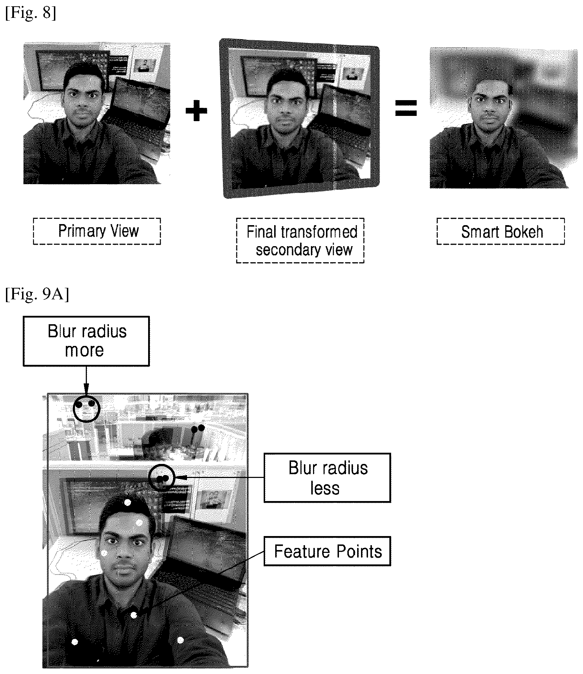

FIG. 8 illustrates an example scenario of wrapping the at least one transformed secondary image frame over the primary image frame, according to an embodiment as disclosed herein.

In an embodiment, the edge segmentor (160b) determines the boundary of the at least one RROI based on the primary image frame and the at least one secondary image frame, aligns the RROI of the primary image frame with the RROI in the at least one secondary image frame by transforming the at least one secondary image frame based on the determined boundary of the at least one RROI, and determines the boundary of the at least one actual ROI by superimposing the at least one transformed secondary image frame on the primary image frame.

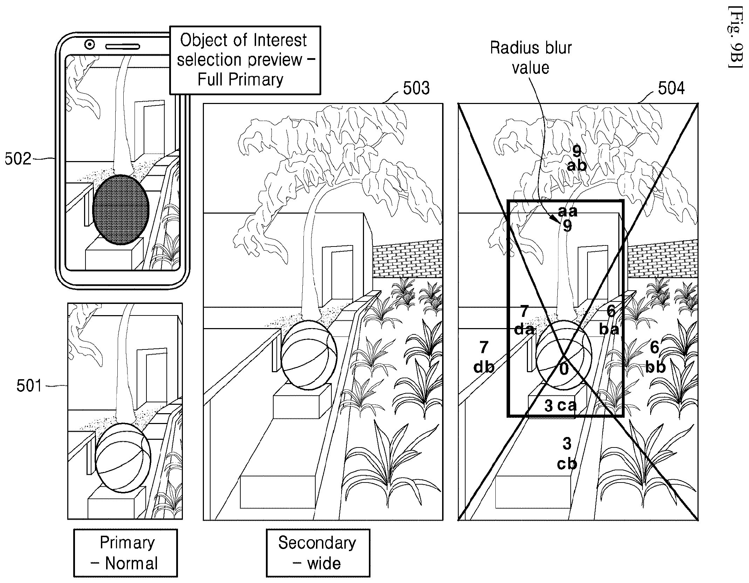

FIGS. 9A and 9B illustrates an example scenario of applying bokeh effect in regions outside the boundary of the at least one actual ROI of the primary image frame based on the determined radius of feature point difference, according to an embodiment as disclosed herein.

FIG. 9A illustrates that the method includes determining the radius of the feature point difference between the primary image frame and the at least one secondary image frame and includes applying the bokeh effect in regions outside the boundary of the at least one actual ROI of the primary image frame based on the radius,

FIG. 9B illustrates another example scenario of applying bokeh effect. At 501, the primary image frame is captured using the primary image sensor (150a) of the electronic device (100). At 502, the media effect controller (160) selects the object of interest, i.e., the actual ROI (i.e. Basketball) in the primary image frame. At 503, the media effect controller (160) captures the at least one secondary image frame using the at least one secondary image sensor (150b-150n) of the electronic device (100). At 504, the media effect controller (160) applies the bokeh effect in regions outside the boundary of the at least one actual ROI of the primary image frame based on the radius. In the example, "a" is centroid of the subject (i.e. Basketball). Lines are extended from the centroid to the corners of the secondary image frame (i.e. wide image). "9" is the average radius blur value on line 'aa,' which is applied in the whole region 'ab.' "6" is the average radius blur value on line 'ba,' which is applied in the whole region 'bb.' "3" is the average radius blur value on line 'ca,' which is applied in the whole region 'cb.' "7" is the average radius blur value on line 'da,' which is applied in the whole region 'db.'

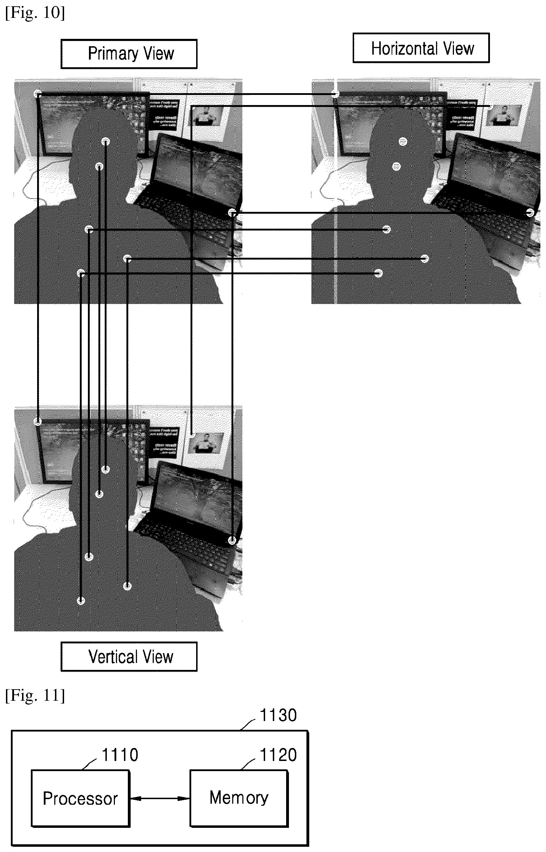

FIG. 10 illustrates an example scenario of generating the media file including one or more parallaxes in multitude of directions, according to an embodiment as disclosed herein. The multitude of directions based on the primary image sensor position, the at least one secondary image sensor position, and the boundary of the at least one actual ROI of the primary image frame.

In existing system, implementation of Parallax Image uses layers of images on differently moving planes. Which looks very artificial and has to be made manually. While the proposed method can be used to create a parallax that automatically gives a sense of depth and even provides a side view for realistic 3D parallax. The proposed method uses overlapped views over the primary view, the object of Interest is a first layer, the background is a second layer, and transform primary view into secondary view for each layer while tilting. Further, the proposed method transforms in increments using matching pixels having matched feature points on the entire image as a guide for the warping.

FIG. 11 is a schematic block diagram of a structure of an image processing apparatus, according to an embodiment. Referring to FIG. 11, the image processing apparatus 1100 may include a memory 1120 storing one or more instructions and a processor 1110 configured to execute the one or more instructions stored in the memory 1120. The memory 1120 may include a single memory or a plurality of memories. The processor 1110 may include a single processor or a plurality of processors.

The processor 1110 may be configured to execute the instructions to obtain a first image captured by a first image sensor, obtain a second image captured by a second image sensor located in a different position from a position of the first image sensor, determine a rough region of interest (RROI) in the first image, determine a geometric transformation that maps a position of an RROI of the second image corresponding to the RROI of the first image to a position of the RROI of the first image, and determine a boundary of a region of interest (ROI) in the first image corresponding to the RROI of the first image, based on the geometric transformation.

Equivalently, the processor 1110 may determine a boundary of an ROI in the second image.

The geometric transformation may move all or part of the RROI of the second image to the position of the RROI of the first image. The geometric transformation may move feature points of the RROI of the second image to the position of the corresponding feature points of the RROI of the first image.

The first image and the second image may be captured simultaneously.

The geometric transformation may include at least one of translation, scaling, or perspective change.

The processor 1110 may be configured to execute the instructions to determine a feature point of the RROI of the first image, determine a feature point of the RROI of the second image corresponding to the feature point of the RROI of the first image, and determine the geometric transformation based on the feature point of the RROI of the first image and the feature point of the RROI of the second image.

The processor 1110 may be configured to execute the instructions to determine a parameter of the geometric transformation using a gradient descent that decreases an error between a position of the feature point of the RROI of the first image and a transformed position of the feature point of the RROI of the second image according to the geometric transformation.

The parameter of the geometric transformation may include at least one of a translation parameter, a scaling parameter, or a perspective change parameter.

The perspective change parameter may be defined based on a relative position of the first image sensor and the second image sensor.

The processor 1110 may be configured to execute the instructions to obtain a third image by applying the geometric transformation to the second image, and determine the boundary of the ROI of the first image based on the first image and the third image.

Equivalently, the processor 1110 may determine a boundary of an ROI in the third image.

The processor 1110 may be configured to execute the instructions to determine a static region between the first image and the third image, and determine the boundary of the ROI of the first image based on the static region.

The processor 1110 may, according to an unclaimed embodiment, be configured to execute the instructions to determine the boundary of the ROI of the first image based on a position difference between corresponding pixels in the first image and the third image.

The processor 1110 may, according to an unclaimed embodiment, be configured to execute the instructions to determine pixels in the first image, of which position differences from corresponding pixels in the third image are less than a threshold value, as the ROI of the first image.

The processor 1110 may be configured to execute the instructions to determine a feature point of a background of the first image based on the boundary of the ROI of the first image, determine a transformed position of a feature point of a background of the second image corresponding to the feature point of the background of the first image, according to the geometric transformation, determine a parameter of an image effect for the feature point of the background of the first image, based on a difference between a position of the feature point of the background of the first image and the transformed position of the feature point of the background of the second image, and generate an output image by applying the image effect on the first image, based on the parameter of the image effect.

To determine the transformed position of the feature point of the background of the second image, the processor 1110 may determine the feature point of the background of the second image, and then transform the position of the feature point of the background of the second image according to the geometric transformation. Alternatively, the processor 1110 may obtain a third image by transforming the second image according to the geometric transformation, and then determine the feature point of the background of the third image.

The image effect may include blurring, and the processor 1110 may be configured to execute the instructions to determine a blur level for the feature point of the background of the first image to be higher when the difference between the position of the feature point of the background of the first image and the transformed position of the feature point of the background of the second image is larger.

The blur level may include a radius, an amount, an intensity, opacity, a depth, or a strength of the blurring.

The image effect includes, according to an unclaimed embodiment, emulating 3 dimensional (3D) parallax, and the processor 1110 may be configured to execute the instructions to generate a 3D parallax image based on the first image and the second image by determining a distance between an object corresponding to the ROI of the first image and an object corresponding to the feature point of the background of the first image higher when the difference between the position of the feature point of the background of the first image and the transformed position of the feature point of the background of the second image being larger.

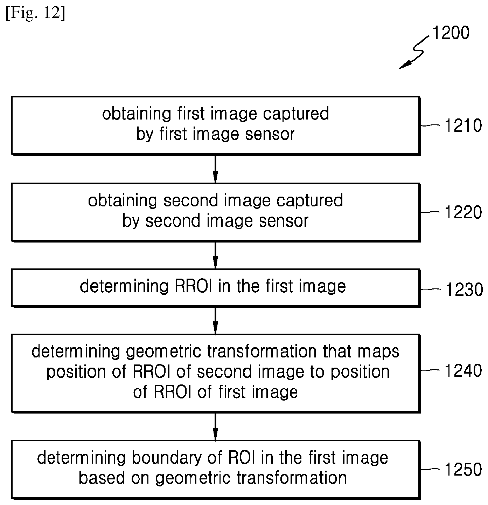

FIG. 12 is a schematic flowchart of an operating method 1200 of the image processing apparatus, according to an embodiment. Referring to FIG. 12, the operating method of the image processing apparatus 1100 may include obtaining a first image captured by a first image sensor, obtaining a second image captured by a second image sensor located in a different position from a position of the first image sensor, determining a rough region of interest (RROI) in the first image, determining a geometric transformation that maps a position of an RROI of the second image corresponding to the RROI of the first image to a position of the RROI of the first image, and determining a boundary of a region of interest (ROI) in the first image corresponding to the RROI of the first image, based on the geometric transformation.

The embodiments disclosed herein can be implemented using at least one software program running on at least one hardware device and performing network management functions to control the elements.

The foregoing description of the specific embodiments will so fully reveal the general nature of the embodiments herein that others can, by applying current knowledge, readily modify and/or adapt for various applications such specific embodiments. It is to be understood that the phraseology or terminology employed herein is for the purpose of description and not of limitation. The invention is defined by the appended claims.

**Claims**

1. An image processing apparatus (100; 1130) comprising:

   a first image sensor (150a);
   a second image sensor (150b) located in a different position from a position of the first image sensor (150a);
   at least one memory (110; 1120) configured to store instructions; and
   at least one processor (120; 1110) configured to execute the instructions to:

      obtain (1210) a first image captured by the first image sensor (150a);
      obtain (1220) a second image captured by the second image sensor (150b);
      determine (1230) a rough region of interest, RROI, in the first image;
      determine (1240) a geometric transformation that maps a position of an RROI of the second image corresponding to the RROI of the first image to a position of the RROI of the first image;
      determine (1250) a boundary of a region of interest, ROI, in the first image corresponding to the RROI of the first image, based on the geometric transformation;
      determine a feature point of a background of the first image based on the boundary of the ROI of the first image;

determine a transformed position of a feature point of a background of the second image corresponding to the feature point of the background of the first image, according to the geometric transformation; and
generate an output image by applying the image effect on the first image, wherein the image effect is determined based on a difference between a position of the feature point of the background of the first image and the transformed position of the feature point of the background of the second image.

2. The image processing apparatus (100; 1130) of claim 1, wherein
the geometric transformation includes at least one of translation, scaling, or perspective change.

3. The image processing apparatus (100; 1130) of claim 1, wherein
the at least one processor (120; 1110) is further configured to execute the instructions to:

determine a feature point of the RROI of the first image;
determine a feature point of the RROI of the second image corresponding to the feature point of the RROI of the first image; and
determine the geometric transformation based on the feature point of the RROI of the first image and the feature point of the RROI of the second image.

4. The image processing apparatus (100; 1130) of claim 3, wherein
the at least one processor (120; 1110) is further configured to execute the instructions to:
determine a parameter of the geometric transformation using a gradient descent that decreases an error between a position of the feature point of the RROI of the first image and a transformed position of the feature point of the RROI of the second image according to the geometric transformation.

5. The image processing apparatus (100; 1130) of claim 4, wherein
the parameter of the geometric transformation includes at least one of a translation parameter, a scaling parameter, or a perspective change parameter.

6. The image processing apparatus (100; 1130) of claim 5, wherein
the perspective change parameter is defined based on a relative position of the first image sensor (150a) and the second image sensor (150b).

7. The image processing apparatus (100; 1130) of claim 1, wherein
the at least one processor (120; 1110) is further configured to execute the instructions to:

obtain a third image by applying the geometric transformation to the second image; and
determine the boundary of the ROI of the first image based on the first image and the third image.

8. The image processing apparatus (100; 1130) of claim 1, wherein

the image effect includes blurring, and
the at least one processor (120; 1110) is further configured to execute the instructions to:
determine a blur level for the feature point of the background of the first image to be higher when the difference between the position of the feature point of the background of the first image and the transformed position of the feature point of the background of the second image is larger.

9. An operating method of an image processing apparatus (100; 1130), the operating method comprising:

obtaining (1210) a first image captured by a first image sensor (150a);
obtaining (1220) a second image captured by a second image sensor (150b), which is located in a different position from a position of the first image sensor (150a);
determining (1230) a rough region of interest, RROI, in the first image;
determining (1240) a geometric transformation that maps a position of an RROI of the second image corresponding to the RROI of the first image to a position of the RROI of the first image;
determining (1250) a boundary of a region of interest, ROI, in the first image corresponding to the RROI of the first image, based on the geometric transformation;
determining a feature point of a background of the first image based on the boundary of the ROI of the first image;
determining a transformed position of a feature point of a background of the second image corresponding to the feature point of the background of the first image, according to the geometric transformation; and

generating an output image by applying the image effect on the first image, wherein the image effect is determined based on a difference between a position of the feature point of the background of the first image and the transformed position of the feature point of the background of the second image.

**10.** A computer readable storage medium, wherein the storage medium stores a computer program that implements, when executed by a processor (120; 1110), the operating method according to claim 9.


**Patentansprüche**

**1.** Bildverarbeitungsvorrichtung (100; 1130), umfassend:

einen ersten Bildsensor (150a);
einen zweiten Bildsensor (150b), der an einer anderen Position als die des ersten Bildsensors (150a) positioniert ist;
mindestens einen Speicher (110; 1120), der konfiguriert ist, um Anweisungen zu speichern; und
mindestens einen Prozessor (120; 1110), der konfiguriert ist, um die Anweisungen auszuführen zum:

Erhalten (1210) eines ersten vom ersten Bildsensor (150a) aufgenommenen Bildes;
Erhalten (1220) eines zweiten vom zweiten Bildsensor (150b) aufgenommenen Bildes;
Bestimmen (1230) einer groben Region von Interesse, RROI, im ersten Bild;
Bestimmen (1240) einer geometrischen Transformation, die eine Position einer RROI des zweiten Bildes, die der RROI des ersten Bildes entspricht, auf eine Position der RROI des ersten Bildes abbildet;
Bestimmen (1250) einer Grenze einer Region von Interesse, ROI, in dem ersten Bild, die der RROI des ersten Bildes entspricht, basierend auf der geometrischen Transformation;
Bestimmen eines Merkmalspunktes eines Hintergrundes des ersten Bildes basierend auf der Grenze der ROI des ersten Bildes;
Bestimmen einer transformierten Position eines Merkmalspunktes eines Hintergrundes des zweiten Bildes, der dem Merkmalspunkt des Hintergrundes des ersten Bildes entspricht, gemäß der geometrischen Transformation; und
Erzeugen eines Ausgabebildes durch Anwenden des Bildeffekts auf das erste Bild, wobei der Bildeffekt basierend auf einer Differenz zwischen einer Position des Merkmalspunktes des Hintergrunds des ersten Bildes und der transformierten Position des Merkmalspunktes des Hintergrunds des zweiten Bildes bestimmt wird.

**2.** Bildverarbeitungsvorrichtung (100; 1130) nach Anspruch 1, wobei
die geometrische Transformation mindestens eine von Translation, Skalierung oder Perspektivenänderung umfasst

**3.** Bildverarbeitungsvorrichtung (100; 1130) nach Anspruch 1, wobei
der mindestens eine Prozessor (120; 1110) ferner konfiguriert ist, um die Anweisungen auszuführen zum:

Bestimmen eines Merkmalspunktes der RROI des ersten Bildes;
Bestimmen eines Merkmalspunktes der RROI des zweiten Bildes, der dem Merkmalspunkt der RROI des ersten Bildes entspricht; und
Bestimmen der geometrischen Transformation basierend auf dem Merkmalspunkt der RROI des ersten Bildes und dem Merkmalspunkt der RROI des zweiten Bildes.

**4.** Bildverarbeitungsvorrichtung (100; 1130) nach Anspruch 3, wobei
der mindestens eine Prozessor (120; 1110) ferner konfiguriert ist, um die Anweisungen auszuführen zum:
Bestimmen eines Parameters der geometrischen Transformation unter Verwendung eines Gradientenabstiegs, der einen Fehler zwischen einer Position des Merkmalspunktes der RROI des ersten Bildes und einer transformierten Position des Merkmalspunktes der RROI des zweiten Bildes gemäß der geometrischen Transformation verringert.

**5.** Bildverarbeitungsvorrichtung (100; 1130) nach Anspruch 4, wobei
der Parameter der geometrischen Transformation mindestens einen eines Translationsparameters, eines Skalierungsparameters oder eines Parameters zur Änderung der Perspektive umfasst.

**EP 4 172 935 B1**

6. Bildverarbeitungsvorrichtung (100; 1130) nach Anspruch 5, wobei
der Parameter zur Änderung der Perspektive basierend auf einer relativen Position des ersten Bildsensors (150a) und des zweiten Bildsensors (150b) definiert wird.

7. Bildverarbeitungsvorrichtung (100; 1130) nach Anspruch 1, wobei
der mindestens eine Prozessor (120; 1110) ferner konfiguriert ist, um die Anweisungen auszuführen zum:

Erhalten eines dritten Bildes durch Anwenden der geometrischen Transformation auf das zweite Bild; und
Bestimmen der Grenze der ROI des ersten Bildes basierend auf dem ersten Bild und dem dritten Bild.

8. Bildverarbeitungsvorrichtung (100; 1130) nach Anspruch 1, wobei

der Bildeffekt eine Unschärfe beinhaltet, und
der mindestens eine Prozessor (120; 1110) ferner konfiguriert ist, um die Anweisungen auszuführen, um:
einen Unschärfegrad für den Merkmalspunkt des Hintergrunds des ersten Bildes als höher zu bestimmen, wenn die Differenz zwischen der Position des Merkmalspunktes des Hintergrunds des ersten Bildes und der transformierten Position des Merkmalspunktes des Hintergrunds des zweiten Bildes größer ist.

9. Verfahren zum Betreiben einer Bildverarbeitungsvorrichtung (100; 1130), wobei das Betriebsverfahren umfasst:

Erhalten (1210) eines ersten Bildes, das von einem ersten Bildsensor (150a) aufgenommen wurde;
Erhalten (1220) eines zweiten Bildes, das von einem zweiten Bildsensor (150b) aufgenommen wurde, der an einer anderen Position als die des ersten Bildsensors (150a) positioniert ist;
Bestimmen (1230) einer groben Region von Interesse, RROI, im ersten Bild;
Bestimmen (1240) einer geometrischen Transformation, die eine Position einer RROI des zweiten Bildes, die der RROI des ersten Bildes entspricht, auf eine Position der RROI des ersten Bildes abbildet;
Bestimmen (1250) einer Grenze einer Region von Interesse, ROI, in dem ersten Bild, die der RROI des ersten Bildes entspricht, basierend auf der geometrischen Transformation;
Bestimmen eines Merkmalspunktes eines Hintergrundes des ersten Bildes basierend auf der Grenze der ROI des ersten Bildes;
Bestimmen einer transformierten Position eines Merkmalspunktes eines Hintergrundes des zweiten Bildes, der dem Merkmalspunkt des Hintergrundes des ersten Bildes entspricht, gemäß der geometrischen Transformation; und
Erzeugen eines Ausgabebildes durch Anwenden des Bildeffekts auf das erste Bild, wobei der Bildeffekt basierend auf einer Differenz zwischen einer Position des Merkmalspunkts des Hintergrunds des ersten Bildes und der transformierten Position des Merkmalspunkts des Hintergrunds des zweiten Bildes bestimmt wird.

10. Computerlesbares Speichermedium, wobei das Speichermedium ein Computerprogramm speichert, das, wenn es von einem Prozessor (120; 1110) ausgeführt wird, das Betriebsverfahren nach Anspruch 9 implementiert.

**Revendications**

1. Dispositif de traitement d'image (100 ; 1130), comprenant :

un premier capteur d'image (150a) ;
un deuxième capteur d'image (150b) situé dans une position différente de la position du premier capteur d'image (150a) ;
au moins une mémoire (110 ; 1120) configurée pour stocker des instructions ; et
au moins un processeur (120; 1110) configuré pour exécuter les instructions pour :

obtenir (1210) une première image capturée par le premier capteur d'image (150a) ;
obtenir (1220) une deuxième image capturée par le deuxième capteur d'image (150b) ;
déterminer (1230) une région d'intérêt approximative, RROI, dans la première image ;
déterminer (1240) une transformation géométrique qui mappe une position d'une RROI de la deuxième image correspondant à la RROI de la première image à une position de RROI de la première image ;
déterminer (1250) une limite d'une région d'intérêt, ROI, dans la première image correspondant à la RROI de la première image, en se basant sur la transformation géométrique ;

déterminer un point caractéristique d'un arrière-plan de la première image en se basant sur la limite de la ROI de la première image ;

déterminer une position transformée d'un point caractéristique d'un arrière-plan de la deuxième image correspondant au point caractéristique de l'arrière-plan de la première image, selon la transformation géométrique ; et

générer une image de sortie en appliquant l'effet d'image sur la première image, l'effet d'image étant déterminé en se basant sur une différence entre une position du point caractéristique de l'arrière-plan de la première image et la position transformée du point caractéristique de l'arrière-plan de la deuxième image.

2. Dispositif de traitement d'image (100 ; 1130) selon la revendication 1, dans lequel
la transformation géométrique comprend au moins un de translation, de mise à l'échelle ou de changement de perspective.

3. Dispositif de traitement d'image (100 ; 1130) selon la revendication 1, dans lequel
l'au moins un processeur (120 ; 1110) est en outre configuré pour exécuter les instructions pour :

déterminer un point caractéristique de la RROI de la première image ;
déterminer un point caractéristique de la RROI de la deuxième image correspondant au point caractéristique de la RROI de la première image ; et
déterminer la transformation géométrique en se basant sur le point caractéristique de la RROI de la première image et le point caractéristique de la RROI de la deuxième image.

4. Dispositif de traitement d'image (100 ; 1130) selon la revendication 3, dans lequel
l'au moins un processeur (120 ; 1110) est en outre configuré pour exécuter les instructions pour :
déterminer un paramètre de la transformation géométrique à l'aide d'une descente de gradient qui diminue une erreur entre une position du point caractéristique de la RROI de la première image et une position transformée du point caractéristique de la RROI de la deuxième image en fonction de la transformation géométrique.

5. Dispositif de traitement d'image (100 ; 1130) selon la revendication 4, dans lequel
le paramètre de la transformation géométrique comprend au moins un d'un paramètre de translation, d'un paramètre de mise à l'échelle ou d'un paramètre de changement de perspective.

6. Dispositif de traitement d'image (100 ; 1130) selon la revendication 5, dans lequel
le paramètre de changement de perspective est défini en se basant sur une position relative du premier capteur d'image (150a) et du deuxième capteur d'image (150b).

7. Dispositif de traitement d'image (100 ; 1130) selon la revendication 1, dans lequel
l'au moins un processeur (120 ; 1110) est en outre configuré pour exécuter les instructions pour :

obtenir une troisième image en appliquant la transformation géométrique à la deuxième image ; et
déterminer la limite de la ROI de la première image en se basant sur la première image et la troisième image.

8. Dispositif de traitement d'image (100 ; 1130) selon la revendication 1, dans lequel

l'effet d'image comprend le flou, et
l'au moins un processeur (120 ; 1110) est en outre configuré pour exécuter les instructions pour :
déterminer un niveau de flou plus élevé pour le point caractéristique de l'arrière-plan de la première image lorsque la différence entre la position du point caractéristique de l'arrière-plan de la première image et la position transformée du point caractéristique de l'arrière-plan de la deuxième image est plus importante.

9. Procédé de fonctionnement d'un dispositif de traitement d'image (100 ; 1130), le procédé de fonctionnement comprenant :

obtenir (1210) une première image capturée par un premier capteur d'image (150a) ;
obtenir (1220) une deuxième image capturée par un deuxième capteur d'image (150b), qui est situé dans une position différente de la position du premier capteur d'image (150a) ;
déterminer (1230) une région d'intérêt approximative, RROI, dans la première image ;
déterminer (1240) une transformation géométrique qui mappe une position d'une RROI de la deuxième image correspondant à la RROI de la première image à une position de la RROI de la première image ;

déterminer (1250) une limite d'une région d'intérêt, ROI, dans la première image correspondant à la RROI de la première image, en se basant sur la transformation géométrique ;

déterminer un point caractéristique d'un arrière-plan de la première image en se basant sur la limite de la ROI de la première image ;

déterminer une position transformée d'un point caractéristique d'un arrière-plan de la deuxième image correspondant au point caractéristique de l'arrière-plan de la première image, selon la transformation géométrique ; et

générer une image de sortie en appliquant l'effet d'image sur la première image, l'effet d'image étant déterminé en se basant sur une différence entre une position du point caractéristique de l'arrière-plan de la première image et la position transformée du point caractéristique de l'arrière-plan de la deuxième image.

10. Support de stockage lisible par ordinateur, dans lequel le support de stockage stocke un programme d'ordinateur qui met en œuvre, lorsqu'il est exécuté par un processeur (120 ; 1110), le procédé de fonctionnement selon la revendication 9.

[Fig. 1]

100

**Electronic device**

110

Memory

120

Processor

130

Communicator

140

Display

150

**Camera**

150a

Camera

150b

Camera

· · ·

150n

Camera

160

Media effect
controller

[Fig. 2]

160

**Media effect controller**

160a

View
transformer

160b

Edge
segmentor

160c

Blur
generator

160d

Graphic
engine

160e

3D parallax
simulator

[Fig. 3A]

300

| Simultaneously capturing the primary image frame using the primary image sensor of the electronic device and the at least one secondary image frame using the at least one secondary image sensor of the electronic device | — 302 |

| Detecting at least one RROI in the primary image frame | — 304 |

| Determining the boundary of at least one actual ROI based on the at least one RROI in the primary image frame and the at least one secondary image frame | — 306 |

| Producing the media file based on the boundary of the at least one actual ROI of the primary image frame | — 308 |

| Storing the media file | — 310 |

[Fig. 3B]

308

| Applying at least one effect in regions outside the boundary of the at least one actual ROI of the primary image frame | — 308a |

| Producing the media file comprising the at least one effect applied in the regions outside the boundary of the at least one actual ROI of the primary image frame | — 308b |

[Fig. 3C]

306

| Determining the boundary of the at least one RROI based on the primary image frame and the at least one secondary image frame | — 306a |

| Aligining the RROI of the primary image frame with the RROI in the at least one secondary image frame by transforming the at least one secondary image frame based on the determined boundary of the at least one RROI | — 306b |

| Determining the boundary of the at least one actual ROI by superimposing the at least one transformed secondary image frame on the primary image frame | — 306c |

[Fig. 3D]

306c

| Applying the gradient descent on transformation parameters | — 306ca |

| Transforming the at least one secondary image frame based on the determined boundary of the at least one the RROI after the gradient descent is applied | — 306cb |

[Fig. 4A]

100

Electronic device

150a — Primary camera

150b — Vertical enhance camera

Horizontal enhance camera — 150c

[Fig. 4B]

[Fig. 4C]

[Fig. 5]

Electronic device

100

Furthest from centroid in 1$^{st}$ Quadrant

Furthest from centroid in 4$^{th}$ Quadrant

Furthest from centroid in 2$^{nd}$ Quadrant

Centroid

Furthest from centroid in 3$^{rd}$ Quadrant

[Fig. 6]

Primary View

Secondary View

Distance Error

[Fig. 7A]

100

Electronic device

9:16

Automatic Focus

Photo  Video  Stickers

100

Electronic device

9:16

Photo  Video  Stickers

100

Electronic device

9:16

Mannual Focus

Photo  Video  Stickers

[Fig. 7B]

| Horizontal Perspective change | | Translation + Zoom | | 100 |
| Electronic device |

Primary camera + Horizontal enhance camera

Primary camera + Vertical enhance camera

Vertical Perspective change

[Fig. 7C]

Zoom

1 2

Perspective change

1 2

Zoom + Perspective change

1 2

1 : Primary and 2: Secondary

[Fig. 7D]

Distance in pixels ($\alpha_x$)

Zoom as a fraction of original ($\beta$)

Perspective as a fraction of original ($r$)

[Fig. 7E]

| | Gradient Descent | Forced Matching |
|---|---|---|
| Visual difference Input Primary view Secondary view | Feature points having some distance error left | Artifact due to forced matching |
| Parameters | Translation(α) Zoom(β) Perspective(r) | Radius of influence for point matching |
| Output | Distance error minimized but may not be zero due to inherent errors in feature point extraction. No unpredictable changes and artifacts | Distance error = 0 Side Effects −1)Artifacts in Object of Interest 2) Unpredictable Changes in background |

[Fig. 7F]

Distance error
feature points
minimized

After

Final transformed
secondary view

Distance error
of feature points

Before

[Fig. 8]

Primary View + Final transformed secondary view = Smart Bokeh

[Fig. 9A]

Blur radius more

Blur radius less

Feature Points

[Fig. 9B]

[Fig. 10]

Primary View

Horizontal View

Vertical View

[Fig. 11]

[Fig. 12]

1200

| obtaining first image captured<br>by first image sensor | 1210 |

| obtaining second image captured<br>by second image sensor | 1220 |

| determining RROI in the first image | 1230 |

| determining geometric transformation that maps<br>position of RROI of second image to position<br>of RROI of first image | 1240 |

| determining boundary of ROI in the first image<br>based on geometric transformation | 1250 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160131261 A
- US 9142010 B2
- US 8619148 B1